# EUROPÄISCHE PATENTSCHRIFT

(11) **EP 0 485 900 B1**
(45) Veröffentlichungstag und Bekanntmachung des Hinweises auf die Patenterteilung: **23.08.1995**
(21) Anmeldenummer: 91119052.8
(22) Anmeldetag: 08.11.1991
(51) Int. Cl.: H04M 1/65

(54) **Teilnehmerendeinrichtung mit einem Schreib-/Lesespeicher mit mindestens zwei Speicherbereichen variabler Grösse**
Subscriber equipment provided with a read/write memory with at least two variable size memory fields
Equipement d'abonné muni d'une mémoire en mode lecture ou écriture avec au moins deux domaines de grandeur variable

(30) Priorität: 10.11.1990 DE 4035861
(43) Veröffentlichungstag der Anmeldung: 20.05.1992
(73) Patentinhaber: Grundig E.M.V. Elektro-Mechanische Versuchsanstalt Max Grundig GmbH & Co. KG, 90762 Fürth (DE)
(72) Erfinder: Terkowski, Jürgen, Grundig E.M.V., Kurtgartenstrasse 37,öW-8510 Fuerth (DE)

(56) Entgegenhaltungen:
- EP-A- 0 012 864
- US-A- 4 713 835
- PATENT ABSTRACTS OF JAPAN vol. 011, no. 190 (E-517)18. Juni 1987 & JP-A-62 018 858 (SONY CORP.) 27 Januar 1987
- PATENT ABSTRACTS OF JAPAN vol. 013, no. 136 (E-737)5. April 1989 & JP-A-63 299 561 (TAMURA ELECTRIC WORKS) 7 Dezember 1988

## Beschreibung

Die Erfindung betrifft eine Teilnehmerendeinrichtung, insbesondere einen Anrufbeantworter, gemäß dem Oberbegriff des Patentanspruchs 1.

Im zunehmenden Maße werden in der Teilnehmerendeinrichtung eines Nachrichtensystems Gerätekombinationen, meist bestehend aus Fernsprechapparat, Anrufbeantworter, Telekopierer, schnurlosem Telefon usw. über die Hauptanschlußleitung angeschlossen. Die Netzanschlüsse der Teilnehmerendeinrichtungen ermöglichen den Informationsaustausch, vor allen Dingen den papierlosen Transport von Nachrichten, Informationen und Dokumenten zwischen gleichen und/oder unterschiedlichen Textverarbeitungssystemen, Ablagesystemen, Rechnern usw. über verschiedene Nachrichtennetze für vermittelte Verbindungen. Beispielsweise ist aus der DE-OS 38 44 425 ein Telekopierer mit integriertem Anrufbeantworter bekannt.

Wie Untersuchungen ergeben haben, kommt der Sprachkommunikation nach wie vor hohe Bedeutung zu, so daß auch bei zukünftigen Gerätekombinationen das Umsteuern in den Anrufbeantworterbetrieb möglich sein wird. Kommt beispielsweise über die Hauptanschlußleitung zur Gerätekombination ein Rufsignal an, so wird mittels einer in der Gerätekombination angeordneten Ruferkennungsschaltung und und damit verbundener Steuereinrichtung die Kommunikationsart, z.B. Anrufbeantworter- oder Telekopierer-Betrieb, ermittelt und ein Ansagetext zum rufenden Teilnehmer über das Nachrichtennetz übertragen. Diese Ansage kann beispielsweise wie folgt lauten: "Guten Tag, hier automatischer Anrufbeantworter und automatischer Telekopierer der Firma ... . Nach dem folgenden Signalton können Sie eine Nachricht aufsprechen oder eine Telefax-Nachricht übermitteln." Als Massenspeicher für die Ansage und für die Aufzeichnung der Nachricht des anrufenden Teilnehmers wurde meist ein Magnetband-Speicher vorgesehen.

Im Laufe der Entwicklung von Speichertechnologien wurde untersucht, ob nicht auch andere Speichertypen für den Einsatzfall Sprachspeicherung günstiger sind. Da durch die Datenverarbeitung der Bedarf, große Informationsmengen zu speichern, von Jahr zu Jahr zunimmt, fanden zunehmend digitale Speicher zur Speicherung der Daten ihre technische Anwendung.

Bestimmend für den Einsatz des jeweiligen Speichertyps sind im wesentlichen die Speicherkapazität, die Zugriffszeit, die Kosten pro Bit oder Byte und die Flüchtigkeit der gespeicherten Daten. Für den Einsatzfall der Sprachspeicherung in einem Anrufbeantworter können Magnetbandspeicher oder auch andere Ausführungsformen von nichtflüchtigem Schreib-/Lese-Speicher mit wahlfreiem oder seriellem Zugriff (digitale Speicher) benutzt werden. Während beim Magnetbandspeicher der Speicherplatz nicht direkt erreicht werden kann, sondern der Zugriff vom Ort der Speicherplätze abhängig ist, kann bei einem wahlfreien Zugriff (Random Access) ein bestimmter Speicherplatz (z.B. 2. Zeile, 6. Spalte) durch die Adresse erreicht werden. Magnetbandspeicher werden in der Regel dort benutzt, wo es nicht auf kurze Zugriffszeiten ankommt, wobei von Vorteil die geringen Kosten pro Bit durch die hohe Aufzeichnungsdichte (man rechnet hier mit Mikro-Pfennigen pro Bit) und die Nichtflüchtigkeit der Daten sind.

Auch die Eignung von flüchtigen Schreib-/Lese-Speichern, z.B. Halbleiterspeicher, wurde untersucht. Vorteile der Halbleiterspeicher sind die kurze Zugriffszeit, die hohe Packungsdichte, die einfache Verknüpfung mit anderen Halbleiterbausteinen sowie die einfache Möglichkeit der Speichererweiterung. In der Regel werden dynamische oder statische Schreib-/Lese-Speicher benutzt. Statische RAM (random access memory) benötigen zu Aufrechterhaltung der Daten (meist in Flip-Flops gespeichert) dauernd einen bestimmten Strom, während beim dynamischen RAM (wobei die Daten meist in integrierten Kondensatoren gespeichert sind) die Ladung infolge der Leckströme nach einer bestimmten Zeit (z.B. nach einigen Millisekunden) aufgefrischt werden muß.

Der Einsatz von Magnetband-Speichern und/oder von digitalen Speichern zur Speicherung von Sprachtexten in einem Anrufbeantworter ist beispielsweise in der DE-AS 28 54 516, DE-PS 31 04 564, DE-PS 31 04 565, DE-OS 31 18 420, DE-PS 31 19 080 ausführlich beschrieben. Auch elektrisch programmierbare und löschbare Festwertspeicher (EEPROM, Electrically Erasable Programmable Read Only Memory) können benutzt werden, wie dies in der DE-OS 31 19 226 oder der DE-PS 32 14 249 erläutert ist.

Das beim Schreib-/Lese-Vorgang angewandte Verfahren, insbesondere die Ausgestaltung der Speicheradressierung beim Aufsprechen des Ansagetextes, ist in der EP-B1-0 012 864 ausführlich beschrieben. Beim Gegenstand der EP-B1-0 012 864 wird von einem Fernsprechapparat mit einem Festkörperspeicher für den Ansagetext ausgegangen, welcher wahlweise mit einem Meldetext-Bereich, einem Absagetext-Bereich und einem Beantwortungstext-Bereich oder mit nur einem Ansagetext-Bereich betreibbar ist. Die einzelnen Speicherbereiche sind direkt adressierbar. Zur Adressierung der Speicherplätze der einzelnen Speicherbereiche bei der Aufnahme bzw. Wiedergabe der einzelnen Textabschnitte ist ein Zähler vorgesehen, dem ein Takt zugeführt wird. Weiterhin ist im Fernsprechapparat ein sogenannter Prüfspeicher angeordnet, welcher mit dem Zähler verbunden ist und dessen Speicherelemente in den gesetzten Zustand übergehen, nachdem der dem einzelnen Speicherelement zugeordnete Speicherbereich vollständig durchadressiert worden ist. Bei Betätigung einer Prüftaste kann der Zustand der Speicherelemente des Prüfspeichers optisch angezeigt werden. Der Benutzer erkennt dadurch auch ohne die zeit- und bedienungsaufwendige Wiedergabe der Ansagetextabschnitte, ob die Aufnahmevorgänge unbeabsichtigt zu früh abgebrochen worden sind. Nur wenn alle Speicherelemente des Prüfspeichers gesetzt sind, sind die Ansagetextabschnitte entsprechend der von den Dienstbetreibern (Postverwaltungen) vorgeschriebenen Art und Dauer aufgezeichnet worden. Demzufolge wird beim Gegenstand der EP-B1-0 012 864 der jeweilige zusammenhängende Speicherbereich durch eine Adresse gekennzeichnet, und beim Aufsprechen des Ansagetextes muß der Benutzer den Speicherbereich vollständig füllen. Bei einer solchen Ausgestaltung eines Schreib-/Lesespeichers kann der Benutzer die Länge des jeweiligen Ansagetextes nicht entsprechend seinen Wünschen ändern, sondern die Sprechdauer ist unmittelbar durch die hierfür fest vorgegebene Speicherbereichsgröße festgelegt.

Der Erfindung liegt die Aufgabe zugrunde, eine aus der EP-B1-0 012 864 bekannte Teilnehmerendeinrichtung derart weiterzubilden, daß der Benutzer unter Beibehaltung gewohnter Arbeitsweise, beispielsweise seiner Sprechweise und Sprechgeschwindigkeit, eine Nachricht für einen anrufenden Teilnehmer in einen Schreib-/Lese-Speicher eingeben kann.

Diese Aufgabe wird bei einer gattungsgemäßen Teilnehmerendeinrichtung durch die kennzeichnenden Merkmale des Patentanspruchs 1 gelöst.

Die erfindungsgemäße Teilnehmerendeinrichtung weist den Vorteil auf, daß durch die dynamische Speicherverwaltung das Eingeben von Nachrichten in den Schreib-/Lese-Speicher, beispielsweise das Aufsprechen von Ansagetexten, auf überraschend einfache Art und Weise erleichtert wird. Dabei werden nichtzulässige Sprachpausen von mehr als zwei Sekunden ausgeblendet und führen zu keiner Belegung im Schreib-/Lesespeicher. Weiterhin ist von Vorteil, daß ein kostengünstiger Speichertyp, nämlich ein serieller Speicher, benutzt werden kann. Dadurch, daß die physikalischen Speicherbereiche nahtlos aneinander anschließen, können nicht nur die einzelnen Ansagetexte innerhalb fest vorgegebener Grenze beliebig lang sein, sondern zudem wird in der Regel eine bessere Ausnutzung der Gesamtspeicherkapazität des Schreib-/Lese-Speichers erreicht. Dies ist darauf zurückzuführen, daß in der Regel für weitere Ansagetexte ein verketteter Speicherbereich des seriellen Speichers zur Verfügung steht.

Ist gemäß der Ausführungsform nach Patentanspruch 2 mit der Steuereinrichtung und dem Schreib-/Lese-Speicher ein Vorwärts-/Rückwärtszähler verbunden, so kann auf überraschend einfache Art und Weise und mit geringem Schaltungsaufwand die jeweils zur Verfügung stehende Speicherbereichsgröße ermittelt werden. Hierzu kann während eines Initialisierungslaufes vom Vorwärts-/Rückwärtszähler die Gesamtspeicherkapazität des Schreib-/Lese-Speichers ermittelt werden. Von der Steuereinrichtung wird der zugeordnete Zählwert zur Ermittlung der jeweils fest vorgegebenen Grenzen der Speicherbereiche und des / oder der Anfangszählwerte benutzt. Dadurch kann bei einer Speicherbereichserweiterung auf einfache Art und Weise nachträglich die jeweilige Größe des zur Verfügung stehenden Speicherbereichs ermittelt werden.

Die Ausführungsform der Teilnehmerendeinrichtung gemäß Patentanspruch 3 weist den Vorteil auf, daß der programmtechnische Aufwand zur Steuerung des Schreib-/Lesevorgangs gering ist. Dies ist darauf zurückzuführen, daß es sich um zusammenhängende Speicherbereiche handelt und von der Steuereinrichtung anhand des jeweiligen Zählerstands am Ende des Ansagetextes die Ansteuerung der jeweiligen Speicherbereiche erfolgen kann. Der Zählerstand entspricht von der Funktion her dabei einer Marke, welche bei Magnetbandspeichern häufig als Adresse für einen bestimmten Nachrichten- bzw. Datenblock benutzt wird.

Aus der DE-OS 34 29 769 ist ein Verfahren zur Texteingabe in ein Diktiergerät oder einen Anrufbeantworter bekannt, bei dem in Verbindung mit einem Halbleiterspeicher ebenfalls eine Marke benutzt wird. Bei diesem Verfahren werden - zur Korrektur bzw. zum Ersetzen von Textteilen durch neue Textteile - die Anfangs- und Endpunkte der auszutauschenden, gesprochenen Textteile durch einen Markierungscode bestimmt. Beim Einfügen des Markierungscodes wird jeweils der ursprüngliche Text im Halbleiterspeicher um die Codewortlänge verschoben.

Im Unterschied dazu wird beim Schreibvorgang gemäß der Erfindung die Marke, d.h. das Ende des jeweiligen Ansagetextes nicht unter einer bestimmten Adresse mit entsprechender Codierung abgespeichert, sondern die Marke wird aus Zählerstand und Tastenbetätigung abgeleitet. Dies erfolgt beispielsweise dadurch, daß das Loslassen der Aufnahmetaste am Ende des jeweiligen Ansagetextes von der Steuereinrichtung detektiert wird und der jeweilige Zählerstand als Marke dient.

Die weitere Verfahrensabfolge beim Gegenstand der DE-OS 3429769 ist wie folgt:

Nach der Markierung betätigt der Benutzer eine Korrekturtaste, wodurch eine Korrekturablaufsteuerung entweder die vorletzte Markierung am Ende oder die erste Markierung am Anfang des im digitalen Speichers befindlichen Textes ansteuert. Im seriellen Halbleiterspeicher wird je nach Länge des neuen Textteils der nachfolgende ursprüngliche Text von Speicherplatz zu Speicherplatz weitergeschoben oder aufgeschlossen, wenn der Benutzer eine Fülltaste betätigt.

Verschiedene, beim Gegenstand der DE-OS 34 29 769 zur Diktatkorrektur benutzten Mittel und Verfahrensschritte können überraschenderweise in der erfindungsgemäßen Teilnehmerendeinrichtung zur Bedienerführung bei der Eingabe von Nachrichten in einen Schreib-/Lese-Speicher in gleicher Weise benutzt werden, so daß vorgegebene Forderungen bezüglich der Zeitdauer von Ansagetexten eingehalten werden können. Es ist beispielsweise möglich, in entsprechender Weise die Verschiebung der jeweiligen Nachrichten, z.B. Ansagetexte, im Schreib-/Lesespeicher der erfindungsgemäßen Teilnehmerendeinrichtung vorzunehmen, um beispielsweise die Reihenfolge der Ansagetexte auf einfache Art und Weise zu vertauschen.

Die Ausführungsform nach Patentanspruch 4 erfordert keinen zusätzlichen Schaltungsaufwand, da die ohnehin in modernen Teilnehmerendeinrichtungen vorhandene Anzeigeeinheit mitbenutzt werden kann. Durch die alternierende Anzeige von Anfangszählwert und Mindestzählwert vor dem Aufsprechen des Ansagetextes, erkennt der Benutzer mit einem Blick die momentan noch zur Verfügung stehende und die mindestens zu belegende Speicherkapazität.

Leitet die Steuereinrichtung gemäß Patentanspruch 5 aus der Ansteuerung des jeweiligen Speicherbereichs ein Kriterium zur automatischen Umschaltung der Betriebsart der Teilnehmerendeinrichtung ab, so kann der sonst hierfür benötigte Betriebsartenschalter entfallen. Weiterhin ist von Vorteil, daß durch die automatische Umschaltung der Betriebsart für den Benutzer eine Bedienungserleichterung gegeben ist und der anrufende Teilnehmer nicht versehentlich die falsche Mitteilung erhält.

Die Erfindung wird im folgenden anhand einer in der Zeichnung dargestellten Ausführungsform näher beschrieben und erläutert.

Es zeigen:
- Fig. 1: eine Ausführungsform der erfindungsgemäßen Teilnehmerendeinrichtung in Ansicht und
- Fig. 2: das Blockschaltbild der Ausführungsform nach Fig.1.

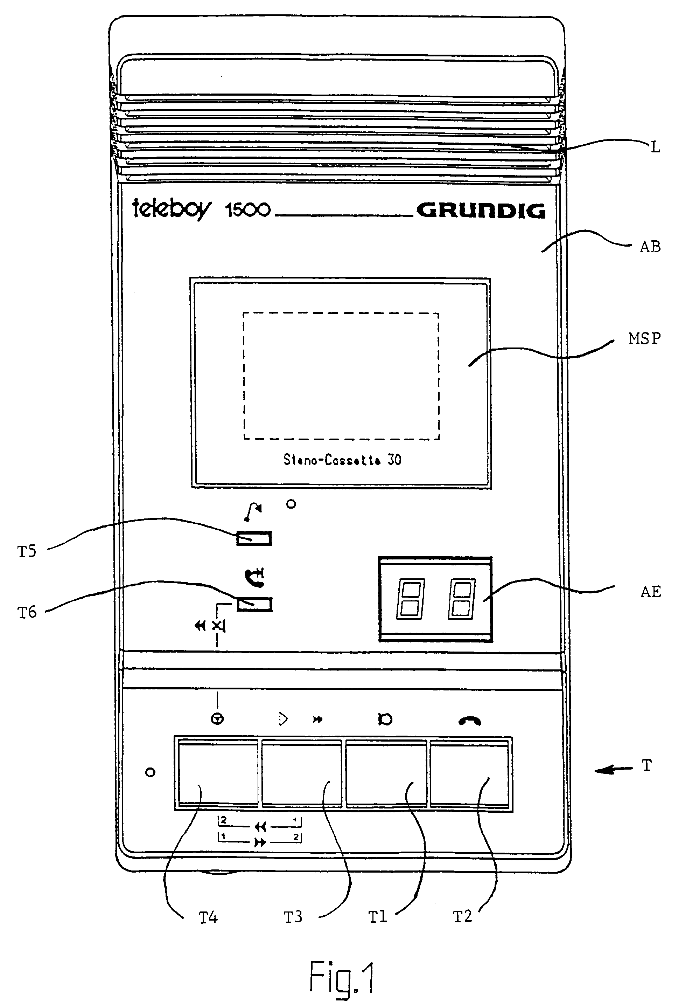

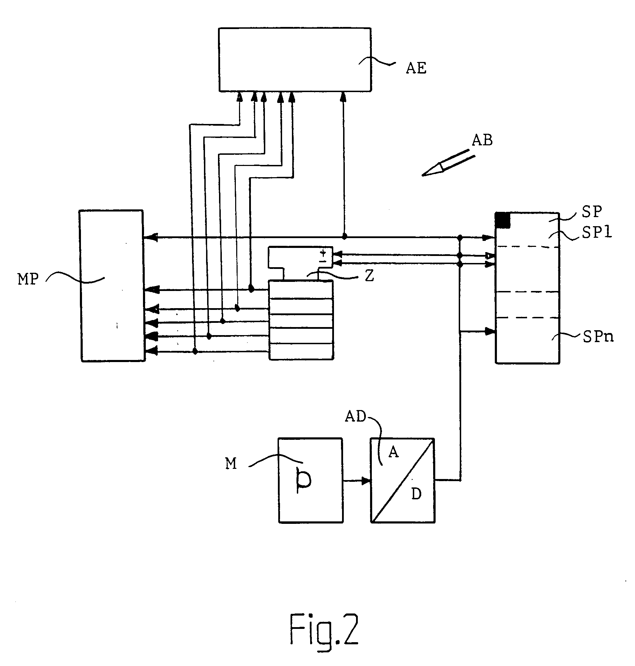

Bei der in Fig. 1 dargestellten Ausführungsform wird als Anwendungsfall von einem Anrufbeantworter ausgegangen, wobei der anrufende Teilnehmer verschiedene Ansagetexte erhalten kann. Anstelle von Sprachdaten, welche im Schreib-/Lesespeicher SP (siehe Fig. 2) gespeichert werden, kann es sich bei diesem Anwendungsfall auch um Textdaten handeln, die ausgelesen, über das Nachrichtennetz übertragen und an der Anzeigeeinheit des Komforttelefons des anrufenden Teilnehmers angezeigt werden.

Erfindungsgemäß ist der Schreib-/Lesespeicher SP des Anrufbeantworters AB ein serieller Speicher mit mindestens zwei Speicherbereichen variabler Größe für die Aufnahme kundenspezifischer Ansagetexte. Der Anrufbeantworter AB weist eine Anzeigeeinheit AE auf, an welcher der belegte Teil relativ zur Gesamtkapazität des jeweiligen Speicherbereichs (SP1, ..., SPn) angezeigt wird. Weitere an der Anzeigeeinheit AE dargestellte Informationen sind beispielsweise die Anruf- und Nachrichtenzählung, die Textwahlanzeige, die Anzeige der Restspielzeit, Codes für Gerätefunktionen, Fehler und Fernabfrage, Bandpositionierung usw. Zur Steuerung der verschiedenen Betriebsfunktionen des Anrufbeantworters AB in den verschiedenen Betriebsarten, z.B. "Nur-Anrufbeantwortung"; "Anrufbeantwortung mit Aufzeichnung und Fernabfrage";" Abhören aufgezeichneter Nachrichten"; "Diktierbetrieb" und "Konferenzbetrieb", sind vom Benutzer entsprechende Bedienelemente T1 bis T4 und T6 zu betätigen. Beispielsweise betätigt der Benutzer zur Aufzeichnung eines Ansagetextes zuerst die Taste T1 und anschließend die Taste T2 oder für die Aufzeichnung eines Diktats zuerst wieder die Taste T1 und anschließend die Taste T3. Durch Betätigen der Taste T2 kann vom Benutzer die aufgezeichnete Nachricht, d.h. die Ansage oder das Diktat, abgehört werden. Die Lautsprecher L sind im flachen pultförmigen Gehäuse des Anrufbeantworter AB unter den Kühlschlitzen bzw. dem anschließenden Lautsprechergrill angeordnet. Neben dem Lautsprecher L ist das Laufwerk für den Magnetbandspeicher MSP (Aufzeichnungskassette) angeordnet, welches von der Steuereinrichtung MP (vgl. Fig. 2) angesteuert wird. Vor dem Kassettenfach ist eine Kassettenfachtaste T5 angeordnet, welche vom Benutzer zum Kassettenwechseln zu betätigen ist. Unterhalb dieser Taste T5 befindet sich eine weitere Taste T6, welche vom Benutzer für das Mitschneiden von Telefonkonferenzen zu betätigen ist.

Fig. 2 zeigt in Form eines Blockschaltbilds weitere Einzelheiten der erfindungsgemäßen Teilnehmerendeinrichtung. Die Länge der über Mikrofon M, A/D-Wandler AD dem jeweiligen Speicherbereich SP1, ..., SPn zugeführten Ansagetexte ist direkt proportional zum Zählerstand eines mit dem Schreib-/Lesespeicher SP verbundenen Vorwärts-/Rückwärtszählers Z. Die Größe der Speicherbereiche SP1, ..., SPn ist innerhalb durch die Steuereinrichtung MP fest vorgegebener Grenzen derart veränderbar, daß die belegten physikalischen Speicherbereiche SP1, ..., SPn nahtlos aneinander anschließen. Der Vorwärts-/Rückwärtszähler Z zählt beim Schreibvorgang rückwärts und beim Lesevorgang vorwärts. Dabei entspricht der Anfangszählwert des Vorwärts-/Rückwärtszählers Z beim Beginn des Schreibvorgangs der Größe des jeweils zur Verfügung stehenden Speicherbereichs SP1,..., SPn.

Bei der in Fig. 2 dargestellten Ausführungsform ist der Schreib-/Lesespeicher SP ein serieller Halbleiterspeicher, beispielsweise ein DRAM mit 1Mbit Gesamtspeicherkapazität. Die Steuereinrichtung MP steuert anhand des jeweiligen Zählerstands am Ende des Ansagetextes den jeweiligen Speicherbereich SP1, ..., SPn an und leitet daraus ein Kriterium zur automatischen Umschaltung der Betriebsart des Anrufbeantworters AB ab (d.h. Abhörautomatik für die Ansagetexte, Auskunftgeberfunktion; Ansage ABA, d.h. Meldung, Mitteilung und Schlußansage mit mindestens 3 Sekunden und maximal 30 Sekunden; Ansage AB, d.h. Meldung, Mitteilung mit mindestens 3 Sekunden und maximal 30 Sekunden; Ansage vom SP und Auskunft vom MSP usw.).

Als Anzeigeeinheit AE wird bei der in der Fig. 2 dargestellten Ausführungsform eine Segmentanzeige benutzt, welche mit dem Vorwärts-/Rückwärtszähler Z und der Steuereinheit MP verbunden ist. Wie bereits erwähnt, dient der Vorwärts-/Rückwärtszähler Z während eines Initialisierungslaufs zur Ermittlung der Gesamtspeicherkapazität des Schreib-/Lesespeichers SP. Von der Steuereinrichtung MP wird der jeweilige Zählwert am Ende des Initialisierungslaufs zur Ermittlung der jeweils fest vorgegebenen Grenzen der verschiedenen Speicherbereiche benutzt. Vor dem Aufsprechen eines Ansagetextes werden an der Anzeigeeinheit AE alternierend Anfangszählwert, entsprechend der maximalen Speicherbereichsgröße bzw. der zur Verfügung stehenden maximalen Sprechdauer, und Mindestzählwert, entsprechend der fest vorgegebenen Grenze des Speicherbereichs, angezeigt. Beim Aufsprechen des Ansagetextes selbst wird der jeweilige Momentanzählwert entsprechend der noch zur Verfügung stehenden Zeitdauer für den jeweiligen Ansagetext angezeigt.

Die erfindungsgemäße Teilnehmereinrichtung ist vielfältig für die Aufzeichnung und Wiedergabe beliebiger Nachrichten zu einem anrufenden Teilnehmer einsetzbar, erfordert durch die lückenlose Aufzeichnung in einem seriellen Speicher einen vergleichsweise geringen Schaltungsaufwand, insbesondere Speicheraufwand, und bietet zudem dem Benutzer einen hohen Bedienkomfort.

## Patentansprüche

1. Teilnehmerendeinrichtung, insbesondere Anrufbeantworter (AB) mit einem Schreib-/Lesespeicher (SP), welcher in mindestens zwei Speicherbereichen (SP1, ..., SPn) aufgeteilt ist, mit einer Anzeigeeinheit (AE) zur Anzeige des belegten Teils relativ zur Gesamtkapazität des jeweiligen Speicherbereichs (SP1, ..., SPn) und mit einer mit dem Schreib-/Lesespeicher (SP), der Anzeigeeinrichtung (AE) und einem Zähler (Z) verbundenen Steuereinrichtung, insbesondere einem Mikroprozessor (MP), welcher die verschiedenen Gerätefunktionen der Teilnehmerendeinrichtung (AB) und den Austausch vermittlungstechnischer Informationen zwischen Teilnehmerendeinrichtung (AB) und Vermittlungsstelle des Nachrichtensystems steuert,
**dadurch gekennzeichnet**,
daß der Schreib-/Lesespeicher (SP) ein serieller Speicher ist und daß die Größe der Speicherbereiche (SP1, ..., SPn) in Abhängigkeit von der Länge der zu speichernden Nachricht innerhalb durch die Steuereinrichtung (MP) fest vorgegebener Grenzen derart veränderbar ist, daß die belegten physikalischen Speicherbereiche (SP1, ..., SPn) nahtlos aneinander anschließen.

2. Teilnehmerendeinrichtung nach Anspruch 1,
**dadurch gekennzeichnet**,
daß mit der Steuereinrichtung (MP) und dem Schreib-/Lesespeicher (SP) ein Vorwärts-/Rückwärtszähler (Z) verbunden ist, welcher beim Schreibvorgang rückwärts und beim Lesevorgang vorwärts zählt und daß der Anfangszählwert des Vorwärts-/Rückwärtszählers (Z) beim Beginn des Schreibvorgangs der Größe des jeweils zur Verfügung stehenden Speicherbereichs (SP1, ..., SPn) entspricht.

3. Teilnehmerendeinrichtung nach Anspruch 2,
**dadurch gekennzeichnet**,
daß der Schreib-/Lesespeicher (SP) ein Halbleiterspeicher zur Speicherung von Ansagetexten ist und daß die Steuereinrichtung (MP) anhand des jeweiligen Zählerstands am Ende des Ansagetextes den jeweiligen Speicherbereich (SP1, ..., SPn) ansteuert.

4. Teilnehmerendeinrichtung nach einem oder mehreren der Ansprüche 1 bis 3,
**dadurch gekennzeichnet**,
daß als Anzeigeeinheit (AE) eine Segmentanzeige oder eine Matrixanzeige benutzt wird und daß die mit der Anzeigeeinheit (AE) und dem Vorwärts-/Rückwärtszähler (Z) verbundene Steuereinheit (MP) vor dem Aufsprechen eines Ansagetextes alternierend Anfangszählwert und Mindestzählwert entsprechend der Speicherbereichsgrenze bzw. der zur Verfügung stehenden Sprechdauer und beim Aufsprechen des Ansagetextes den Momentanzählwert anzeigt.

5. Teilnehmerendeinrichtung nach einem oder mehreren der Ansprüche 1 bis 4,
**dadurch gekennzeichnet**,
daß die Steuereinrichtung (MP) aus der Ansteuerung des jeweiligen Speicherbereichs (SP1, ..., SPn) beim Schreibvorgang für den Lesevorgang ein Kriterium zur automatischen Umschaltung der Betriebsart der Teilnehmerendeinrichtung (AB) ableitet.

## Claims

1. Subscriber terminal device, in particular answering machine (AB), having a write/read memory (SP) which is divided into at least two memory areas (SP1, ..., SPn), having a display unit (AE) for displaying the occupied section relative to the total capacity of the respective memory area (SP1, ..., SPn) and having a control device connected to the write/read memory (SP), the display device (AE) and a counter (Z), in particular a microprocessor (MP) which controls the various appliance functions of the subscriber terminal device (AB) and the exchange of switching information between subscriber terminal device (AB) and exchange of the communication system, characterized in that the write/read memory (SP) is a serial memory and in that the size of the memory areas (SP1, ..., SPn) can be varied as a function of the length of the message to be stored within limits fixed by the control device (MP) in such a way that the occupied physical memory areas (SP1, ..., SPn) adjoin one another seamlessly.

2. Subscriber terminal device according to Claim 1, characterized in that there is connected to the control device (MP) and the write/read memory (SP) a bidirectional counter (Z) which counts downwards during the write operation and upwards during the read operation and in that the initial count value of the bidirectional counter (Z) at the start of the write operation corresponds to the size of the memory area (SP1, ..., SPn) available in each case.

3. Subscriber terminal device according to Claim 2, characterized in that the write/read memory (SP) is a semiconductor memory for storing announcement texts and in that the control device (MP) addresses the respective memory area (SP1, ..., SPn) on the basis of the respective counter reading at the end of the announcement text.

4. Subscriber terminal device according to one or more of Claims 1 to 3, characterized in that a segment display or a matrix display is used as display unit (AE) and in that, before an announcement text is recorded, the control unit (MP) connected to the display unit (AE) and the bidirectional counter (Z) alternately displays initial count value and minimum count value corresponding to the memory area limit or to the available speaking time and, while the announcement text is being recorded, indicates the current count value.

5. Subscriber terminal device according to one or more of Claims 1 to 4, characterized in that the control device (MP) deduces from addressing the respective memory area (SP1, ..., SPn) during the write operation a criterion for automatically switching the mode of the subscriber terminal device (AB) for the read operation.

## Revendications

1. Poste terminal d'abonné, notamment répondeur (AB), comportant une mémoire d'enregistrement/lecture (SP), qui est subdivisée en au moins deux zones de mémoire (SP1, ..., SPn), une unité d'affichage (AE) servant à afficher la partie occupée par rapport à la capacité totale de la zone de mémoire respective (SP1,...,SPn) et un dispositif de commande, notamment un microprocesseur (MP), qui est relié à la mémoire d'enregistrement/lecture (SP), au dispositif d'affichage (AE) à un compteur (Z) et qui commande les différentes fonctions d'appareils du poste terminal d'abonné (AB) et l'échange d'informations techniques de commutation entre le poste terminal d'abonné (AB) et un central du système de transmission d'informations, caractérisé en ce que la mémoire d'enregistrement/lecture (SP) est une mémoire série et que la taille des zones de mémoire (SP1,...SPn) peut être modifiée, en fonction de la longueur de l'information devant être mémorisée, à l'intérieur de limites prédéterminées de façon fixe par le dispositif de commande (MP), de telle sorte que les zones de mémoire physiques occupées (SP1,...SPn) se raccordent entre elles sans jonction.

2. Poste terminal d'abonné selon la revendication 1, caractérisé en ce qu'au dispositif de commande (MP) et à la mémoire d'enregistrement/lecture (SP) est raccordé un compteur progressif/régressif (Z), qui exécute un comptage régressif lors de l'opération d'enregistrement et exécute un comptage progressif lors de l'opération de lecture et que la valeur initiale de comptage du compteur progressif/régressif (Z) au début de l'opération d'enregistrement correspond à la taille de la zone de mémoire (SP1,...SPn) respectivement disponible.

3. Poste terminal d'abonné selon la revendication 2, caractérisé en ce que la mémoire d'enregistrement/lecture (SP) est une mémoire à semiconducteurs servant à mémoriser des textes d'annonces et que le dispositif de commande (MP) commande la zone de mémoire respective (SP1,...,SPn) sur la base de l'état de comptage respectif à la fin du texte d'annonce.

4. Poste terminal d'abonné selon une ou plusieurs des revendications 1 à 3, caractérisé en ce qu'on utilise comme unité d'affichage (AE) un affichage à segments ou un affichage matriciel et que l'unité de commande (MP), qui est reliée à l'unité d'affichage (AE) et au compteur progressif/régressif (Z), affiche, avant l'enregistrement d'un texte d'annonce, alternativement l'état initial de comptage et la valeur minimale de comptage conformément à la limite de la zone de mémoire ou à la durée de parole disponible et, lors de l'enregistrement du texte d'annonce, la valeur de comptage instantanée.

5. Poste terminal d'abonné selon ou plusieurs des revendications 1 à 4, caractérisé en ce que lors de l'opération d'enregistrement, le dispositif de commande (MP) tire, de la commande de la zone de mémoire respective (SP1,...,SPn), pour l'opération de lecture, un critère de commutation automatique du type de fonctionnement du poste terminal d'abonné (AB).
